# EUROPEAN PATENT SPECIFICATION

(11) **EP 2 523 480 B1**
(45) Date of publication and mention of the grant of the patent: **21.10.2020**
(21) Application number: 10848741.4
(22) Date of filing: 16.09.2010
(51) Int. Cl.: H04W 4/16, H04W 88/18, H04L 12/24, H04L 29/14, H04W 24/04

(54) **METHOD AND SYSTEM FOR EMERGENCY SWITCHING**
VERFAHREN UND SYSTEM FÜR DIE NOTFALLSCHALTUNG
PROCÉDÉ ET SYSTÈME POUR COMMUTATION DE SECOURS

(30) Priority: 02.04.2010 CN 201010142717
(43) Date of publication of application: 14.11.2012
(73) Proprietor: ZTE Corporation, Shenzhen, Guangdong 518057 (CN)
(72) Inventor: WANG, Guocai, Shenzhen Guangdong 518057 (CN); XIA, Xingxin, Shenzhen Guangdong 518057 (CN); ZHANG, Haojun, Shenzhen Guangdong 518057 (CN)
(74) Representative: Novagraaf Technologies
(86) International application number: PCT/CN2010/076986
(87) International publication number: WO 2011/120282

(56) References cited:
- EP-A1- 1 679 842
- EP-A1- 2 091 180
- CN-A- 101 150 436
- CN-A- 101 616 385
- JP-A- 2006 268 687
- US-A- 5 936 936
- US-A- 6 108 300
- US-A1- 2006 120 396
- US-A1- 2008 020 759
- US-B1- 6 728 780

## Description

### Field

The disclosure relates to communication technologies, and in particular to a method and a system for emergency switching in communication technologies.

### Background

At present, multiple service processing subsystems exist in many communication systems. Each service processing subsystem is relatively independent. For example, a multimedia message service interworking gateway (MMSIG) service processing subsystem is used in a service forwarding system of a point-to-point MMS message among (or between) networks of operators, and an interworking gateway service processing subsystem is provided between each operator and any other operator, as a result, each operator at least has two sets of interworking gateway service processing subsystems.

As each service processing subsystem plays a significant role in communication process, significant devices are generally backed up for the purpose of avoiding a fault of a device of a service processing subsystem. At present, the generally adopted backup technology is a dual hot standby technology.

However, the dual hot standby technology has disadvantages as follows: 1) when a frame of a server cannot work due to a certain reason, such as power failure, the original device and the backup device which are in power failure due to the power failure of the frame cannot work, therefore switching cannot be realized in time; 2) when the switching is failed, the normal operation of the service still cannot be guaranteed. If the two cases occur, the backup device needs to be started manually to bear the service which the device in problem bears. Generally speaking, the time taken for starting the backup device manually is at least 1 to 2 hours, and the manual switching process is wasted in time and labour as well as goes wrong easily. Document US 6 728 780 represents relevant prior art.

### Summary

The invention is defined by the claims. Considering the above, the embodiment of the present invention mainly provides a method and a system for emergency switching so as to start a backup device conveniently and rapidly when a problem occurs in an original device.

In order to solve the above technical problems, the technical solution of the embodiment of the present invention is realized in the following way.

A method for emergency switching comprises: after a problem occurs in a device of a first service processing subsystem, modifying, by a network device responsible for address mapping, a mapping relationship of an Internet Protocol (IP) address which is mapped to the first service processing subsystem so as to map the IP address which is mapped to the first service processing subsystem to a second service processing subsystem; and processing a service of the first service processing subsystem by the second service processing subsystem, wherein the second service processing subsystem stores data needed for processing the service of the first service processing subsystem in advance.

The step of processing the service of the first service processing subsystem by the second service processing subsystem comprises the following steps performed by the second service processing subsystem: starting using a first emergency account which is preset to be used to connect with a communication object of the first service processing subsystem, and establishing a connection with the communication object of the first service processing subsystem through the first emergency account.

The step of processing the service of the first service processing subsystem by the second service processing subsystem comprises the following steps performed by the second service processing subsystem: starting using a second emergency account which is preset to be used to connect with a peripheral device of the first service processing subsystem, and establishing a connection with the peripheral device of the first service processing subsystem through the second emergency account.

After the step of processing the service of the first service processing subsystem by the second service processing subsystem, the method further comprises: when a fault of the device in the first service processing subsystem is removed, restoring the mapping relationship by the network device; disconnecting a connection with a communication object and a peripheral device of the first service processing subsystem by the second service processing subsystem; and establishing a connection with the communication object and the peripheral device by the first service processing subsystem.

The step of modifying the mapping relationship of the IP address which is mapped to the first service processing subsystem by the network device responsible for the address mapping comprises: running, by the second service processing subsystem, a preset network device script to control the network device responsible for the address mapping to modify the mapping relationship of the IP address which is mapped to the first service processing subsystem or restore the mapping relationship of the IP address of the first service processing system.

A system for emergency switching comprises a first service processing subsystem, a second service processing subsystem and a network device responsible for address mapping, wherein the network device responsible for the address mapping is used for, after a problem occurs in a device of the first service processing subsystem, modifying a mapping relationship of an Internet Protocol (IP) address which is mapped to the first service processing subsystem so as to map the IP address which is mapped to the first service processing subsystem to the second service processing subsystem; and the second service processing subsystem is used for, after the network device modifies the mapping relationship of the IP address which is mapped to the first service processing subsystem, processing a service of the first service processing subsystem according to data which is stored in advance and needed for processing the service of the first service processing subsystem.

The second service processing subsystem is used for, after the mapping relationship of the IP address which is mapped to the first service processing subsystem is modified by the network device, starting using a first emergency account which is preset to be used to connect with a communication object of the first service processing subsystem and establishing a connection with the communication object of the first service processing subsystem through the first emergency account.

The second service processing subsystem is used for, after the mapping relationship of the IP address which is mapped to the first service processing subsystem is modified by the network device, starting using a second emergency account which is preset to be used to connect with a peripheral device of the first service processing subsystem and establishing a connection with the peripheral device of the first service processing subsystem through the second emergency account.

The network device is further used for, after a fault of the device in the first service processing subsystem is removed, restoring the mapping relationship of the IP address of the first service processing subsystem; the second service processing subsystem is further used for, after the fault of the device in the first service processing subsystem is removed, disconnecting a connection with a communication object and a peripheral device of the first service processing subsystem; and the first service processing subsystem is used for re-establishing a connection with the communication object and the peripheral device after the fault is removed.

The second service processing subsystem is further used for running a network device script preset in the second service processing subsystem to control the network device responsible for the address mapping to modify the mapping relationship of the IP address which is mapped to the first service processing subsystem or restore the mapping relationship of the IP address of the first service processing system.

The embodiment of the present invention provides a method and a system for emergency switching. By configuring a mapped IP address in a previous level network device which can map addresses, the embodiments of the present invention enable corresponding devices in respective service processing subsystems to be backup devices to each other. When a problem occurs in a device of a service processing subsystem, as long as an IP address, which is mapped to the network device, in the previous level network device is mapped to a corresponding device of another service processing subsystem, and the corresponding device in another service processing subsystem acts as a backup device to process a service of the device in which the problem occurs, thus enabling simple and fast starting of a backup device when a problem occurs in the original device.

### Brief Description of the Drawings

Fig. 1 shows a first flowchart of a method for emergency switching in accordance with an embodiment of the present invention;
Fig. 2 shows a second flowchart of a method for emergency switching in accordance with an embodiment of the present invention;
Fig. 3 shows a structural diagram of a system for emergency switching in accordance with an embodiment of the present invention; and
Fig. 4 shows a structural diagram of a system for emergency switching of multimedia message service in a China Unicom network in accordance with an embodiment of the present invention.

### Detailed Description of the Embodiments

Embodiments of the present invention provide a method and a system for emergency switching. A network element which is used for address mapping exists in a general system, and the network element may be a router, and in most cases, may be a firewall which is used for security management and address mapping. In accordance with the embodiments of the present invention, by making use of the network element which is able to perform address mapping, the address mapping relationship can be modified after a problem occurs in a device of one service processing subsystem through a beforehand configuration, data which should be forwarded to a service processing subsystem in which a problem occurs are forwarded to another service processing subsystem which acts as a backup service processing subsystem, and the backup service processing subsystem temporarily processes the service of the service processing subsystem in which a problem occurs. Therefore, the backup device can be conveniently and quickly started, meanwhile, as the distance between two service processing subsystems is not limited, high flexibility can be obtained.

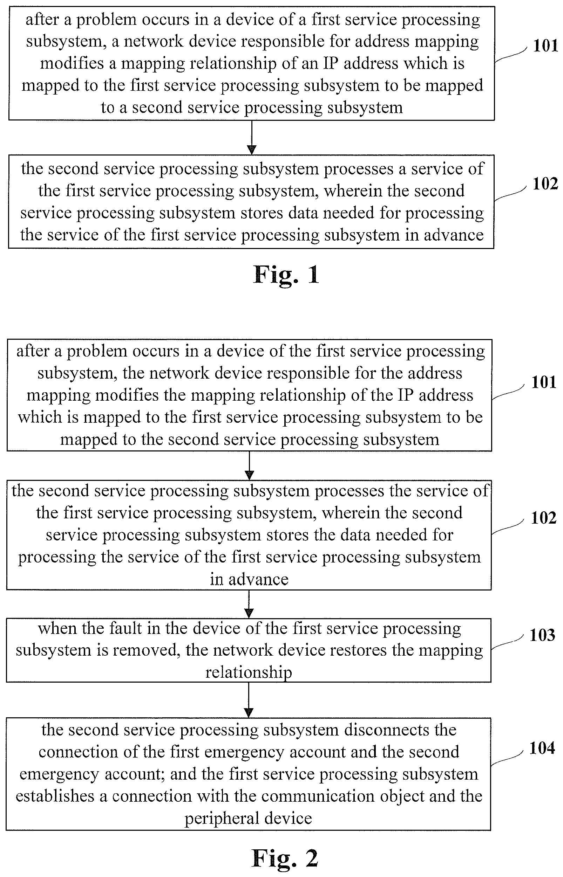

As shown in the Fig. 1, the method for emergency switching provided by an embodiment of the present invention comprises the following steps:
step 101, after a problem occurs in a device of a first service processing subsystem, a network device responsible for address mapping in a communication system modifies a mapping relationship of an IP address which is mapped to the first service processing subsystem so as to map the IP address which is mapped to the first service processing subsystem to a second service processing subsystem; and
step 102, the second service processing subsystem processes a service of the first service processing subsystem, wherein the second service processing subsystem stores data needed for processing the service of the first service processing subsystem in advance.

Thus, as long as the IP address which is mapped to the first service processing subsystem is directly modified to be mapped to the second service processing subsystem according to beforehand configuration, and the data needed for processing the service of the first service processing subsystem are stored in the second service processing subsystem in advance, the second service processing subsystem can act as a backup service processing subsystem of the first service processing subsystem to process the service of the first service processing subsystem temporarily when the first service processing subsystem cannot work normally, therefore the switching process is fast and convenient. As the method of modifying the address mapping relationship is adopted, there is no requirement on the position relationship between the first service processing subsystem and the second service processing subsystem, the first service processing subsystem and the second service processing subsystem can even be located in two cities far away from each other. Consequently, although accidents, such as regional power failure, occur, the method for emergency switching provided by the embodiment of the present invention can be still adopted for emergency treatment.

The network device which is used for address mapping may be a router, a switch or a firewall for security management and address mapping.

Generally speaking, in order to guarantee the security of a communication procedure, each service processing subsystem is required to establish a connection with a communication object and a peripheral device through an account and realize the processing for communication and relevant service on the basis of the connection. In this case, an emergency account is required to be configured in the second service processing subsystem, specifically, the number of the configured emergency accounts is as many as the number of the communication objects and the peripheral devices with which the connection needs to be established. The second service processing subsystem starts using the first emergency account which is preset to be used to connect with a communication object of the first service processing subsystem and establishes a connection with the communication object of the first service processing subsystem through the first emergency account after the network device modifies the mapping relationship of the IP address which is mapped to the first service processing subsystem. If the first service processing subsystem has a peripheral device, the second service processing subsystem also needs to start a second emergency account which is preset to be used to connect with the peripheral device of the first service processing subsystem and establish a connection with the peripheral device of the first service processing subsystem through the second emergency account.

In addition, according to an embodiment of the present invention, a corresponding network device script is configured on each service processing subsystem. When a service processing subsystem is required to take over the service of another service processing subsystem, the service processing subsystem runs the corresponding network device script to control the network device for address mapping to modify the address mapping relationship and enable the network device to forward data, which are forwarded to the service processing subsystem in which a fault occurs, to the service processing subsystem. When the fault is removed, the service processing subsystem runs a corresponding script to control the network device for address mapping to restore the address mapping relationship and enable the network device to forward the data to the service processing subsystem in which the fault is removed as normal. The modification and restoration of the mapped address are very convenient.

Furthermore, as shown in the Fig. 2, the method for emergency switching in accordance with an embodiment of the present invention further comprises the follows:
step 103, when the fault in the device of the first service processing subsystem is removed, the network device restores the mapping relationship; and
step 104, the second service processing subsystem disconnects the connection of the first emergency account and of the second emergency account; and the first service processing subsystem establishes a connection with the communication object and the peripheral device.

Thus, it is convenient and rapid to disconnect the connection between the second service processing subsystem and the communication object as well as the peripheral device of the first service processing subsystem, so that the switching from the second service processing subsystem to the first service processing subsystem can be realized.

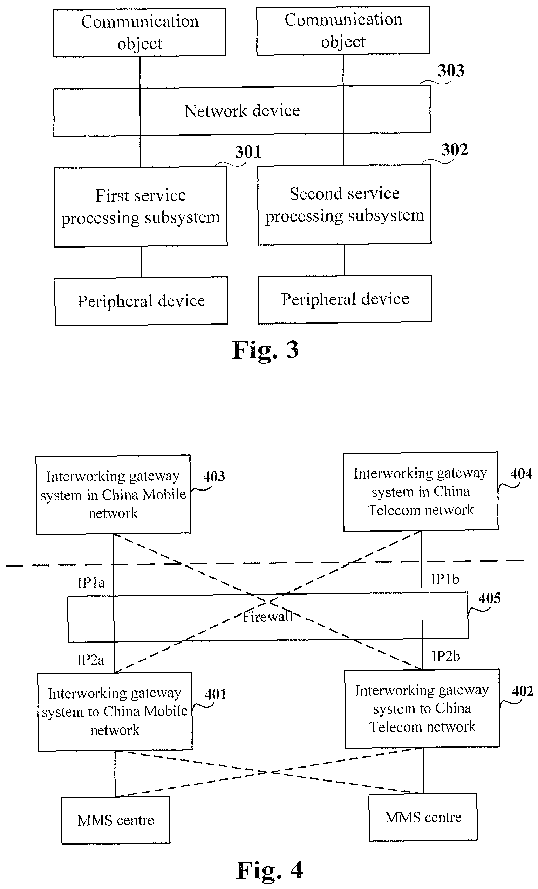

The embodiment of the present invention also provides a system for emergency switching, as shown in the Fig. 3, comprising: a first service processing subsystem 301, a second service processing subsystem 302 and a network device 303 for address mapping, wherein
the network device 303 for the address mapping is used for, after a problem occurs in a device of the first service processing subsystem 301, modifying a mapping relationship of an IP address which is mapped to the first service processing subsystem 301 and enabling the IP address which is mapped to the first service processing subsystem 301 to be mapped to the second service processing subsystem 302; and
the second service processing subsystem 302 is used for, after the network device modifies the mapping relationship of the IP address which is mapped to the first service processing subsystem 301, processing a service of the first service processing subsystem 301 according to data which are stored in advance and needed for processing the service of the first service processing subsystem 301.

The network device 303 may be a router, a switch or a firewall.

Furthermore, when it is required to establish a connection with a communication object of the first service processing subsystem by using an account, the second service processing subsystem 302 is specifically used for, after the network device modifies the mapping relationship of the IP address which is mapped to the first service processing subsystem 301, starting using a first emergency account which is preset to be used to connect with the communication object of the first service processing subsystem 301 and establishing a connection with the communication object of the first service processing subsystem 301 through the first emergency account.

When the first service processing subsystem 301 has a peripheral device, in order to realize secure communication with the peripheral device, the second service processing subsystem 302 is specifically used for, after the network device modifies the mapping relationship of the IP address which is mapped to the first service processing subsystem 301, starting using a second cmcrgcncy account which is preset to be used to connect with a peripheral device and establishing a connection with the peripheral device of the first service processing subsystem 301 through the second emergency account.

Furthermore, in order to bring convenience to restore an original state after the fault of the first service processing subsystem is removed, the network device 303 is further used for, when the fault in the device of the first service processing subsystem 301 is removed, restoring the mapping relationship of the IP address of the first service processing subsystem 301;
the second service processing subsystem 302 is further used for, when the fault in the device of the first service processing subsystem is removed, disconnecting the connection of the first emergency account and of the second emergency account, that is to say, disconnecting the connection with the communication object as well as the peripheral device of the first service processing subsystem;
the first service processing subsystem 301 is used for re-establishing a connection with the communication object as well as the peripheral device after the fault is removed.

An embodiment is taken for illustration below.

As shown in the Fig. 4, by taking a China Unicom network as an example, the communication technology adopted in the China Unicom network is different from that adopted in a China Mobile network and a China Telecom network, so in order to realize a internetwork service, it is required to set, in the China Unicom network, an interworking gateway system 401 to the China Mobile network and an interworking gateway system 402 to the China Telecom network. Generally, taking the multimedia message service as an example, the interworking gateway system 401 to the China Mobile network and the interworking gateway system 402 to the China Telecom network process respective multimedia messages, and there is no message interaction therebetween.

Providing that the IP address of the interworking gateway system 401 to the China Mobile network is IP2a, the interworking gateway system 401 to the China Mobile network establishes a connection with an interworking gateway system 403 in the China Mobile network through a firewall 405, and the firewall 405 sets the IP address for the connection as IP1a. When the interworking gateway system 403 in the China Mobile network communicates with the interworking gateway system 401 to the China Mobile network, the interworking gateway system 403 in the China Mobile network sends data to the address IP1a, and the firewall 405 maps the address IP1a to the IP2a. Actually, although the interworking gateway system 403 in the China Mobile network sends the data to the address IP1a, the interworking gateway system 403 in the China Mobile network actually sends the data to the interworking gateway system 401 to the China Mobile network with the IP address of IP2a due to the mapping of the firewall 405. For the same reason, providing that the IP address of the interworking gateway system 402 to the China Telecom network is IP2b, the interworking gateway system 402 to the China Telecom network establishes a connection with an interworking gateway system 404 in the China Telecom network through the firewall 405, and the firewall 405 sets the IP address for the connection as IP1b. When the interworking gateway system 404 in the China Telecom network communicates with the interworking gateway system 402 to the China Telecom network, although the interworking gateway system 404 in the China Telecom network sends data to the address IP1b, the interworking gateway system 404 in the China Telecom network actually sends the data to the interworking gateway system 402 to the China Telecom network with the IP address of IP2b due to the mapping of the firewall 405.

In accordance with the method for emergency switching provided by the embodiment of the present invention, after the interworking gateway system 402 to the China Telecom network works abnormally and thus cannot provide a service, preset firewall script or menu operation can be performed on the interworking gateway system 401 to the China Mobile network, and the interworking gateway system 401 to the China Mobile network takes over the service of the interworking gateway system 402 to the China Telecom network. After the preset firewall script or the menu operation is performed on the interworking gateway system 401 to the China Mobile network, the firewall 405 is controlled to modify the address mapped with the IP1b from the IP2b to the IP2a. A message sent from the interworking gateway system 404 in the China Telecom network to the interworking gateway system 402 to the China Telecom network can be directly sent to the interworking gateway system 401 to the China Mobile network according to the address mapping relationship, and such switching costs little time and reduces the service lost to the maximum extent. After the interworking gateway system 402 to the China Telecom network returns to normal, a restoration can be performed in the interworking gateway system 401 to the China Mobile network. After a preset firewall script or menu operation is performed, the firewall 405 is made to restore the address mapped with the IP1b to the IP2b so as to switch the service back to the interworking gateway system 402 to the China Telecom network. For the same reason, when the interworking gateway system 401 to the China Mobile network works abnormally and cannot provide a service, the interworking gateway system 402 to the China Telecom network can act as a backup service processing subsystem.

Furthermore, the emergency switching can be performed in a way of primary and standby transmission links on a network layer, and each link uses a uniform bandwidth.

It is required to configure, in the interworking gateway system 401 to the China Mobile network, account data of the interworking gateway system 402 to the China Telecom network, such as account, password and the like between the interworking gateway system 402 to the China Telecom network and the peripheral device as well as communication object such as the interworking gateway system 404 in the China Telecom network and the MMS centre, and the account is the emergency account. In addition, it is required to configure service data of the interworking gateway system 402 to the China Telecom network, such as network number, number section and the like, so as to guarantee that the interworking gateway system 401 to the China Mobile network can normally process the service, such as authentication, after the takeover. Meanwhile, it is also required to configure the account data and service data of the interworking gateway system 401 to the China Mobile network in the interworking gateway system 402 to the China Telecom network.

One-key takeover and one-key restoration function button or option is added in an operating system, and the firewall script which is required to be used for the takeover or restoration is called directly after the trigger so as to bring convenience to an operator.

For example, the interworking gateway system 401 to the China Mobile network is configured with an account, which is a first emergency account, between the interworking gateway system 402 to the China Telecom network and the interworking gateway system 404 in the China Telecom network; and the interworking gateway system 401 to the China Mobile network is configured with another account, which is a second emergency account, between the interworking gateway system 402 to the China Telecom network and an MMS centre. For the same reason, the interworking gateway system 402 to the China Telecom network is also configured with an account, which is a first emergency account, between the interworking gateway system 401 to the China Mobile network and the interworking gateway system 403 in the China Mobile network; and the interworking gateway system 402 to the China Telecom network is also configured with an account, which is a second emergency account, between the interworking gateway system 401 to the China Mobile network and the MMS centre,

Two following firewall scripts are configured in a configuration interface on the interworking gateway system 401 to the China Mobile network: one script is a firewall script for taking over the Telecom service, i.e. mapping the IP1b to the IP2a; and the other script is a firewall script for restoring the Telecom service to the original interworking gateway system 402 to the China Telecom network, i.e. mapping the IP1b to the IP2b. For the same reason, two following firewall scripts, one of which takes over the Mobile service and the other of which restores the Mobile service, are configured in the configuration interface of the interworking gateway system 402 to the China Telecom network, according to different practical condition, the configured firewall scripts are different, but still realize the takeover and restoration of the service through the mapping relationship of the address. Of course, the firewall in the solution also can be a router or a four-layer switch, as long as they are able to modify the mapping of the IP address.

When a device in the interworking gateway system 402 to the China Telecom network goes wrong, corresponding operation can be performed in the interworking gateway system 401 to the China Mobile network. After the interworking gateway system 401 to the China Mobile network receives a takeover command, or when the interworking gateway system 401 to the China Mobile network finds that the device in the interworking gateway system 402 to the China Telecom network goes wrong based on a handshake protocol, the firewall script for taking over the Telecom service is executed automatically so that the firewall 405 maps the IP1b to the IP2a, when the interworking gateway system 404 in the China Telecom network is accessed from the IP2a, what the opposite end sees is also the IP1b. Thus, the opposite end can be ensured to see the same IP address before and after the switching, and the cooperation of the communication object is unnecessary for the switching. The interworking gateway system 401 to the China Mobile network automatically starts using all the emergency accounts including the emergency account with the interworking gateway system 404 in the China Telecom network and the emergency account to the peripheral device, such as the MMS centre. As the interworking gateway system 401 to the China Mobile network automatically inherits the original account and routing data, the message sent from the MMS centre to a Telecom user is automatically sent to the interworking gateway system 401 to the China Mobile network, and the message sent from the interworking gateway system 404 in the China Telecom network to the Unicom network is also automatically sent to the interworking gateway system 401 to the China Mobile network to finish the takeover of the Telecom service.

When the interworking gateway system 402 to the China Telecom network returns to normal, the restoration operation is performed on the interworking gateway system 401 to the China Mobile network. After receiving a restoration command, the interworking gateway system 401 to the China Mobile network automatically performs the firewall script of restoring the Telecom service so that the firewall 405 maps the IP1b to the IP2b. All the emergency accounts are automatically forbidden, including the accounts with the MMS centre and with the interworking gateway system 404 in the China Telecom network. The connections of the emergency accounts are automatically disconnected. After the start of the interworking gateway system 402 to the China Telecom network, the connections of relevant accounts are established automatically, and the Telecom service is succeeded in restoration.

In accordance with the method and system for emergency switching provided by the embodiments of the present invention, by configuring a mapped IP address in a previous level network device which can map addresses, the embodiments of the present invention enable corresponding devices in respective service processing subsystems to be backup devices to each other. When a problem occurs in a device of a service processing subsystem, as long as an IP address, which is mapped to the network device, in the previous level network device is mapped to a corresponding device of another service processing subsystem, and the corresponding device in another service processing subsystem acts as a backup device to process a service of the device in which the problem occurs, thus enabling simple and fast starting of a backup device when a problem occurs in the original device.

Obviously, those skilled in the art can modify and change the present invention without departing from the scope of the present invention. Thus, if the modifications and variations of the present invention belong to the scope of the claims of the present invention, the present invention is intended to include these modifications and variations.

## Claims

1. A method for emergency switching, **characterized by** comprising:
in a system which comprises a first service processing subsystem (301), a second service processing subsystem (302) and a network device (303), wherein the first service processing subsystem (301) is a first interworking gateway system set in a network of a third telecommunication operator and configured to process messages sent from an interworking gateway system in a network of a first telecommunication operator when the first interworking gateway system works normally, and the first interworking gateway system set in the network of the third telecommunication operator establishes a connection with the interworking gateway system in the network of the first telecommunication operator through the network device (303); the second service processing subsystem (302) is a second interworking gateway system set in the network of the third telecommunication operator and configured to process messages sent from an interworking gateway system in a network of a second telecommunication operator when the second interworking gateway system works normally, and the second interworking gateway system set in the network of the third telecommunication operator establishes a connection with the interworking gateway system in the network of the second telecommunication operator through the network device (303); and the network device (303) is responsible for address mapping:
after a problem occurs in a device of the first service processing subsystem (301), modifying (101), by the network device (303) responsible for address mapping, a mapping relationship of a first Internet Protocol (IP) address which is mapped to the first service processing subsystem (301) so as to map the first IP address which is mapped to the first service processing subsystem (301) to a second IP address of the second service processing subsystem (302); and
processing (102) the messages sent from the interworking gateway system in the network of the first telecommunication operator by the second service processing subsystem (302), wherein the second service processing subsystem (302) stores data needed for processing the messages sent from the interworking gateway system in the network of the first telecommunication operator in advance.

2. The method according to claim 1, **characterized in that** the step of processing (102) the service of the first service processing subsystem (301) by the second service processing subsystem (302) comprises the following steps performed by the second service processing subsystem (302): starting using a first emergency account which is preset to be used to connect with a communication object of the first service processing subsystem (301), and establishing a connection with the communication object of the first service processing subsystem (301) through the first emergency account.

3. The method according to claim 1, **characterized in that** the step of processing (102) the service of the first service processing subsystem (301) by the second service processing subsystem (302) comprises the following steps performed by the second service processing subsystem (302): starting using a second emergency account which is preset to be used to connect with a peripheral device of the first service processing subsystem (301), and establishing a connection with the peripheral device of the first service processing subsystem (301) through the second emergency account.

4. The method according to claim 1, 2 or 3, **characterized in that** after the step of processing (102) the service of the first service processing subsystem (301) by the second service processing subsystem, the method further comprises:
when a fault of the device in the first service processing subsystem (301) is removed, restoring (103) the mapping relationship by the network device (303);
disconnecting (104) a connection with a communication object and a peripheral device of the first service processing subsystem (301) by the second service processing subsystem (302); and establishing (104) a connection with the communication object and the peripheral device by the first service processing subsystem (301).

5. The method according to claim 4, **characterized in that** the step of modifying (101) the mapping relationship of the first IP address which is mapped to the first service processing subsystem (301) by the network device (303) responsible for the address mapping comprises: running, by the second service processing subsystem (302), a preset network device script to control the network device (303) responsible for the address mapping to modify the mapping relationship of the first IP address which is mapped to the first service processing subsystem (301) or restore the mapping relationship of the first IP address of the first service processing system.

6. A system for emergency switching, **characterized by** comprising a first service processing subsystem (301), a second service processing subsystem (302) and a network device (303) responsible for address mapping, wherein
the first service processing subsystem (301) is a first interworking gateway system set in a network of a third telecommunication operator and configured to process messages sent from an interworking gateway system in a network of a first telecommunication operator when the first interworking gateway system works normally, and the first interworking gateway system set in the network of the third telecommunication operator establishes a connection with the interworking gateway system in the network of the first telecommunication operator through the network device (303);
the second service processing subsystem (302) is a second interworking gateway system set in the network of the third telecommunication operator and configured to process messages sent from an interworking gateway system in a network of a second telecommunication operator when the second interworking gateway system works normally, and the second interworking gateway system set in the network of the third telecommunication operator establishes a connection with the interworking gateway system in the network of the second telecommunication operator through the network device (303);
the network device (303) responsible for the address mapping is adapted to, after a problem occurs in a device of the first service processing subsystem (301), modify a mapping relationship of a first Internet Protocol (IP) address which is mapped to the first service processing subsystem (301) so as to map the first IP address which is mapped to the first service processing subsystem (301) to a second IP address of the second service processing subsystem (302); and
the second service processing subsystem (302) is adapted to, after the network device (303) modifies the mapping relationship of the first IP address which is mapped to the first service processing subsystem (301), process the messages sent from the interworking gateway system in the network of the first telecommunication operator according to data which is stored in advance and needed for processing the messages sent from the interworking gateway system in the network of the first telecommunication operator.

7. The system according to claim 6, **characterized in that** the second service processing subsystem (302) is adapted to, after the mapping relationship of the first IP address which is mapped to the first service processing subsystem (301) is modified by the network device (303), start using a first emergency account which is preset to be used to connect with a communication object of the first service processing subsystem (301) and establish a connection with the communication object of the first service processing subsystem (301) through the first emergency account.

8. The system according to claim 6, **characterized in that** the second service processing subsystem (302) is adapted to, after the mapping relationship of the first IP address which is mapped to the first service processing subsystem (301) is modified by the network device (303), start using a second emergency account which is preset to be used to connect with a peripheral device of the first service processing subsystem (301) and establish a connection with the peripheral device of the first service processing subsystem (301) through the second emergency account.

9. The system according to claim 6, 7 or 8, **characterized in that**
the network device (303) is further adapted to, after a fault of the device in the first service processing subsystem (301) is removed, restore the mapping relationship of the first IP address of the first service processing subsystem (301);
the second service processing subsystem (302) is further adapted to, after the fault of the device in the first service processing subsystem (301) is removed, disconnect a connection with a communication object and a peripheral device of the first service processing subsystem (301); and
the first service processing subsystem (301) is adapted to re-establish a connection with the communication object and the peripheral device after the fault is removed.

10. The system according to claim 9, **characterized in that** the second service processing subsystem (302) is further adapted to run a network device script preset in the second service processing subsystem (302) to control the network device (303) responsible for the address mapping to modify the mapping relationship of the first IP address which is mapped to the first service processing subsystem (301) or restore the mapping relationship of the first IP address of the first service processing system.

## Patentansprüche

1. Verfahren für Notfallschaltung, **dadurch gekennzeichnet, dass** es umfasst:
in einem System, das ein erstes Dienstverarbeitungsteilsystem (301) umfasst, ein zweites Dienstverarbeitungsteilsystem (302) und eine Netzwerkvorrichtung (303), wobei das erste Dienstverarbeitungsteilsystem (301) ein erstes Zusammenarbeit-Gatewaysystem ist, das in einem Netzwerk eines dritten Telekommunikationsbetreibers eingestellt ist, und konfiguriert ist, um Nachrichten zu verarbeiten, die von einem Zusammenarbeit-Gatewaysystem in einem Netzwerk eines ersten Telekommunikationsbetreibers gesendet werden, wenn das erste Zusammenarbeit-Gatewaysystem normal arbeitet, und das erste Zusammenarbeit-Gatewaysystem, das in dem Netzwerk des dritten Telekommunikationsbetreibers eingestellt ist, eine Verbindung mit dem Zusammenarbeit-Gatewaysystem in dem Netzwerk des ersten Telekommunikationsbetreibers durch die Netzwerkvorrichtung (303) aufbaut; das zweite Dienstverarbeitungsteilsystem (302) ein zweites Zusammenarbeit-Gatewaysystem ist, das in einem Netzwerk eines dritten Telekommunikationsbetreibers eingestellt ist und konfiguriert ist, um Nachrichten zu verarbeiten, die von einem Zusammenarbeit-Gatewaysystem in einem Netzwerk eines zweiten Telekommunikationsbetreibers gesendet werden, wenn das zweite Zusammenarbeit-Gatewaysystem normal arbeitet, und das zweite Zusammenarbeit-Gatewaysystem, das in dem Netzwerk des dritten Telekommunikationsbetreibers eingestellt ist, eine Verbindung mit dem Zusammenarbeit-Gatewaysystem in dem Netzwerk des zweiten Telekommunikationsbetreibers durch die Netzwerkvorrichtung (303) aufbaut; und die Netzwerkvorrichtung (303) verantwortlich für Adresszuordnung ist:
nachdem ein Problem in einer Vorrichtung des ersten Dienstverarbeitungsteilsystems (301) aufgetreten ist, Ändern (101), durch die für die Adresszuordnung verantwortliche Netzwerkvorrichtung (303) einer Zuordnungsbeziehung einer ersten Internetprotokoll-(IP)-Adresse, die dem ersten Dienstverarbeitungsteilsystems (301) zugeordnet ist, um die erste IP-Adresse, die dem ersten Dienstverarbeitungsteilsystems (301) zugeordnet ist, einer zweiten IP-Adresse des zweiten Dienstverarbeitungsteilsystems (302) zuzuordnen; und
Verarbeiten (102) der Nachrichten, die von dem Zusammenarbeit-Gatewaysystem in dem Netzwerk des ersten Telekommunikationsbetreibers durch das zweite Dienstverarbeitungsteilsystem (302) gesendet werden, wobei das zweite Dienstverarbeitungsteilsystem (302) Daten speichert, die zum Verarbeiten der Nachrichten benötigt werden, die von dem Zusammenarbeit-Gatewaysystem in dem Netzwerk des ersten Telekommunikationsbetreibers im Voraus gesendet werden.

2. Verfahren nach Anspruch 1, **dadurch gekennzeichnet, dass** der Schritt des Verarbeitens (102) des Dienstes des ersten Dienstverarbeitungsteilsystems (301) durch das zweite Dienstverarbeitungsteilsystem (302) die folgenden Schritte umfasst, die durch das zweite Dienstverarbeitungsteilsystem (302) ausgeführt werden: Beginnen des Verwendens eines ersten Notfall-Accounts, der vorab eingestellt ist, um verwendet zu werden, um sich mit einem Kommunikationsobjekt des ersten Dienstverarbeitungsteilsystems (301) zu verbinden, und eine Verbindung mit dem Kommunikationsobjekt des ersten Dienstverarbeitungsteilsystems (301) durch den ersten Notfall-Account aufzubauen.

3. Verfahren nach Anspruch 1, **dadurch gekennzeichnet, dass** der Schritt des Verarbeitens (102) des Dienstes des ersten Dienstverarbeitungsteilsystems (301) durch das zweite Dienstverarbeitungsteilsystem (302) die folgenden Schritte umfasst, die durch das zweite Dienstverarbeitungsteilsystem (302) ausgeführt werden: Beginnen des Verwendens eines zweiten Notfall-Accounts, der vorab eingestellt ist, um verwendet zu werden, um sich mit einer Peripherievorrichtung des ersten Dienstverarbeitungsteilsystems (301) zu verbinden, und eine Verbindung mit der Peripherievorrichtung des ersten Dienstverarbeitungsteilsystems (301) durch zweiten ersten Notfall-Account aufzubauen.

4. Verfahren nach Anspruch 1, 2 oder 3, **dadurch gekennzeichnet, dass** nach dem Schritt des Verarbeitens (102) des Dienstes des ersten Dienstverarbeitungsteisystems (301) durch das zweite Dienstverarbeitungsteisystem das Verfahren weiter umfasst:
wenn ein Fehler der Vorrichtung in dem ersten Dienstverarbeitungsteisystem (301) entfernt wird, Wiederherstellen (103) der Zuordnungsbeziehung durch die Netzwerkvorrichtung (303);
Trennen (104) einer Verbindung mit einem Kommunikationsobjekt und einer Peripherievorrichtung des ersten Dienstverarbeitungsteilsystems (301) durch das zweite Dienstverarbeitungsteilsystem (302); und Aufbauen (104) einer Verbindung mit dem Kommunikationsobjekt und der Peripherievorrichtung durch das erste Dienstverarbeitungsteilsystem (301).

5. Verfahren nach Anspruch 4, **dadurch gekennzeichnet, dass** der Schritt des Änderns (101) der Zuordnungsbeziehung der ersten IP-Adresse, die dem ersten Dienstverarbeitungsteilsystem (301) durch die Netzwerkvorrichtung (303) zugeordnet wird, die verantwortlich für die Adresszuordnung ist, umfasst:
Ausführen, durch das zweite Dienstverarbeitungsteilsystem (302), eines voreingestellten Netzwerkvorrichtungsskripts zum Steuern der Netzwerkvorrichtung (303), die für die Adresszuordnung veratwortlich ist, um die Zuordnungsbeziehung der ersten IP-Adresse zu ändern, die dem ersten Dienstverarbeitungsteilsystem (301) zugeordnet ist, oder Wiederherstellen der Zuordnungsbeziehung der ersten IP-Adresse des ersten Dienstverarbeitungssystems.

6. System für Notfallschaltung, **dadurch gekennzeichnet, dass** es ein erstes Dienstverarbeitungsteilsystem (301), ein zweites Dienstverarbeitungsteilsystem (302) und eine Netzwerkvorrichtung (303) umfasst, die für Adresszuordnung verantwortlich ist, wobei
das erste Dienstverarbeitungsteilsystem (301) ein erstes Zusammenarbeit-Gatewaysystem ist, das in einem Netzwerk eines dritten Telekommunikationsbetreibers eingestellt ist, und konfiguriert ist, um Nachrichten zu verarbeiten, die von einem Zusammenarbeit-Gatewaysystem in einem Netzwerk eines ersten Telekommunikationsbetreibers gesendet werden, wenn das erste Zusammenarbeit-Gatewaysystem normal arbeitet, und das erste Zusammenarbeit-Gatewaysystem, das in dem Netzwerk des dritten Telekommunikationsbetreibers eingestellt ist, eine Verbindung mit dem Zusammenarbeit-Gatewaysystem in dem Netzwerk des ersten Telekommunikationsbetreibers durch die Netzwerkvorrichtung (303) aufbaut;
das zweite Dienstverarbeitungsteilsystem (302) ein zweites Zusammenarbeit-Gatewaysystem ist, das in einem Netzwerk eines dritten Telekommunikationsbetreibers eingestellt ist und konfiguriert ist, um Nachrichten zu verarbeiten, die von einem Zusammenarbeit-Gatewaysystem in einem Netzwerk eines zweiten Telekommunikationsbetreibers gesendet werden, wenn das zweite Zusammenarbeit-Gatewaysystem normal arbeitet, und das zweite Zusammenarbeit-Gatewaysystem, das in dem Netzwerk des dritten Telekommunikationsbetreibers eingestellt ist, eine Verbindung mit dem Zusammenarbeit-Gatewaysystem in dem Netzwerk des zweiten Telekommunikationsbetreibers durch die Netzwerkvorrichtung (303) aufbaut;
die Netzwerkvorrichtung (303), die verantwortlich für Adresszuordnung ist, angepasst ist, um, nachdem ein Problem in einer Vorrichtung des ersten Dienstverarbeitungsteilsystems (301) aufgetreten ist, Ändern, durch die für die Adresszuordnung verantwortliche Netzwerkvorrichtung einer Zuordnungsbeziehung einer ersten Internetprotokoll-(IP)-Adresse, die dem ersten Dienstverarbeitungsteilsystems (301) zugeordnet ist, um die erste IP-Adresse, die dem ersten Dienstverarbeitungsteilsystems (301) zugeordnet ist, einer zweiten IP-Adresse des zweiten Dienstverarbeitungsteilsystems (302) zuzuordnen; und
das zweite Dienstverarbeitungsteilsystem (302) angepasst ist, um, nachdem die Netzwerkvorrichtung (303) die Zuordnungsbeziehung der ersten IP-Adresse, die dem ersten Dienstverarbeitungsteilsystems (301) zugeordnet ist, die Nachrichten zu verarbeiten, die von dem Zusammenarbeit-Gatewaysystem in dem Netzwerk des ersten Telekommunikationsbetreibers gemäß den Daten gesendet werden, die im Voraus gespeichert werden und zum Verarbeiten der Nachrichten benötigt werden, die von dem Zusammenarbeit-Gatewaysystem in dem Netzwerk des ersten Telekommunikationsbetreibers gesendet werden.

7. System nach Anspruch 6, **dadurch gekennzeichnet, dass** das zweite Dienstverarbeitungsteilsystem (302) angepasst ist, um, nachdem die Zuordnungsbeziehung einer ersten IP-Adresse, die dem ersten Dienstverarbeitungsteilsystems (301) zugeordnet ist, durch die Netzwerkvorrichtung (303) geändert worden ist, zu beginnen, einen ersten Notfall-Account zu verwenden, der vorab eingestellt ist, um verwendet zu werden, um sich mit einem Kommunikationsobjekt des ersten Dienstverarbeitungsteilsystems (301) zu verbinden, und eine Verbindung mit dem Kommunikationsobjekt des ersten Dienstverarbeitungsteilsystems (301) durch den ersten Notfall-Account aufzubauen.

8. System nach Anspruch 6, **dadurch gekennzeichnet, dass** das zweite Dienstverarbeitungsteilsystem (302) angepasst ist, um, nachdem die Zuordnungsbeziehung einer ersten IP-Adresse, die dem ersten Dienstverarbeitungsteilsystems (301) zugeordnet ist, durch die Netzwerkvorrichtung (303) geändert worden ist, zu beginnen, einen zweiten Notfall-Account zu verwenden, der vorab eingestellt ist, um verwendet zu werden, um sich mit einer Peripherievorrichtung des ersten Dienstverarbeitungsteilsystems (301) zu verbinden, und eine Verbindung mit der Peripherivorrichtung des ersten Dienstverarbeitungsteilsystems (301) durch den zweiten Notfall-Account aufzubauen.

9. System nach Anspruch 6, 7 oder 8, **dadurch gekennzeichnet, dass**
die Netzwerkvorrichtung (303) weiter angepasst ist, um, nachdem ein Fehler der Vorrichtung in dem ersten Dienstverarbeitungsteisystem (301) entfernt wird, die Zuordnungsbeziehung der ersten IP-Adresse des ersten Dienstverarbeitungsteilsystems (301) wiederherzustellen;
das zweite Dienstverarbeitungsteilsystem (302) weiter angepasst ist, um, nachdem der Fehler der Vorrichtung in dem ersten Dienstverarbeitungsteisystem (301) entfernt wird, eine Verbindung mit einem Kommunikationsobjekt und einer Peripherievorrichtung des ersten Dienstverarbeitungsteilsystems (301) zu trennen; und
das erste Dienstverarbeitungsteilsystem (301) angepasst ist, um eine Verbindung mit dem Kommunikationsobjekt und der Peripherievorrichtung wiederherzustellen, nachdem der Fehler entfernt wird.

10. System nach Anspruch 9, **dadurch gekennzeichnet, dass** das zweite Dienstverarbeitungsteilsystem (302) weiter angepasst ist, um ein Netzwerkvorrichtungsskript auszuführen, das in dem zweiten Dienstverarbeitungsteilsystem (302) voreingestellt ist, um die Netzwerkvorrichtung (303) zu steuern, die für die Adresszuordnung veratwortlich ist, um die Zuordnungsbeziehung der ersten IP-Adresse zu ändern, die dem ersten Dienstverarbeitungsteilsystem (301) zugeordnet ist, oder die Zuordnungsbeziehung der ersten IP-Adresse des ersten Dienstverarbeitungssystems wiederherzustellen.

## Revendications

1. Procédé pour une commutation d'urgence, **caractérisé en ce qu'**il comprend :
dans un système qui comprend un premier sous-système de traitement de service (301), un second sous-système de traitement de service (302) et un dispositif de réseau (303), dans lequel le premier sous-système de traitement de service (301) est un premier système de passerelle d'interfonctionnement défini dans un réseau d'un troisième opérateur de télécommunication et configuré pour traiter des messages envoyés depuis un système de passerelle d'interfonctionnement dans un réseau d'un premier opérateur de télécommunication lorsque le premier système de passerelle d'interfonctionnement fonctionne normalement, et le premier système de passerelle d'interfonctionnement défini dans le réseau du troisième opérateur de télécommunication établit une connexion avec le système de passerelle d'interfonctionnement dans le réseau du premier opérateur de télécommunication par l'intermédiaire du dispositif de réseau (303) ; le second sous-système de traitement de service (302) est un second système de passerelle d'interfonctionnement défini dans le réseau du troisième opérateur de télécommunication et configuré pour traiter des messages envoyés depuis un système de passerelle d'interfonctionnement dans un réseau d'un deuxième opérateur de télécommunication lorsque le second système de passerelle d'interfonctionnement fonctionne normalement, et le second système de passerelle d'interfonctionnement défini dans le réseau du troisième opérateur de télécommunication établit une connexion avec le système de passerelle d'interfonctionnement dans le réseau du deuxième opérateur de télécommunication par l'intermédiaire du dispositif de réseau (303) ; et le dispositif de réseau (303) est responsable du mappage d'adresse :
après qu'un problème s'est produit dans un dispositif du premier sous-système de traitement de service (301), la modification (101), par le dispositif de réseau (303) responsable du mappage d'adresse, d'une relation de mappage d'une première adresse de protocole Internet (IP) qui est mappée sur le premier sous-système de traitement de service (301) afin de mapper la première adresse IP qui est mappée sur le premier sous-système de traitement de service (301) sur une seconde adresse IP du second sous-système de traitement de service (302) ; et
le traitement (102) des messages envoyés depuis le système de passerelle d'interfonctionnement dans le réseau du premier opérateur de télécommunication par le second sous-système de traitement de service (302), dans lequel le second sous-système de traitement de service (302) stocke des données nécessaires pour traiter les messages envoyés depuis le système de passerelle d'interfonctionnement dans le réseau du premier opérateur de télécommunication à l'avance.

2. Procédé selon la revendication 1, **caractérisé en ce que** l'étape de traitement (102) du service du premier sous-système de traitement de service (301) par le second sous-système de traitement de service (302) comprend les étapes suivantes effectuées par le second sous-système de traitement de service (302) : le démarrage en utilisant un premier compte d'urgence qui est prédéfini pour être utilisé pour se connecter avec un objet de communication du premier sous-système de traitement de service (301), et l'établissement d'une connexion avec l'objet de communication du premier sous-système de traitement de service (301) par l'intermédiaire du premier compte d'urgence.

3. Procédé selon la revendication 1, **caractérisé en ce que** l'étape de traitement (102) du service du premier sous-système de traitement de service (301) par le second sous-système de traitement de service (302) comprend les étapes suivantes effectuées par le second sous-système de traitement de service (302) : le démarrage en utilisant un second compte d'urgence qui est prédéfini pour être utilisé pour se connecter avec un dispositif périphérique du premier sous-système de traitement de service (301), et l'établissement d'une connexion avec le dispositif périphérique du premier sous-système de traitement de service (301) par l'intermédiaire du second compte d'urgence.

4. Procédé selon la revendication 1, 2 ou 3, **caractérisé en ce qu'**après l'étape de traitement (102) du service du premier sous-système de traitement de service (301) par le second sous-système de traitement de service, le procédé comprend en outre :
lorsqu'une défaillance du dispositif dans le premier sous-système de traitement de service (301) est supprimée, la restauration (103) de la relation de mappage par le dispositif de réseau (303) ;
la déconnexion (104) d'une connexion avec un objet de communication et un dispositif périphérique du premier sous-système de traitement de service (301) par le second sous-système de traitement de service (302) ; et l'établissement (104) d'une connexion avec l'objet de communication et le dispositif périphérique par le premier sous-système de traitement de service (301).

5. Procédé selon la revendication 4, **caractérisé en ce que** l'étape de modification (101) de la relation de mappage de la première adresse IP qui est mappée sur le premier sous-système de traitement de service (301) par le dispositif de réseau (303) responsable du mappage d'adresse comprend : l'exécution, par le second sous-système de traitement de service (302), d'un script de dispositif de réseau prédéfini pour commander le dispositif de réseau (303) responsable du mappage d'adresse pour modifier la relation de mappage de la première adresse IP qui est mappée sur le premier sous-système de traitement de service (301) ou restaurer la relation de mappage de la première adresse IP du premier système de traitement de service.

6. Système pour une commutation d'urgence, **caractérisé en ce qu'**il comprend un premier sous-système de traitement de service (301), un second sous-système de traitement de service (302) et un dispositif de réseau (303) responsable du mappage d'adresse, dans lequel
le premier sous-système de traitement de service (301) est un premier système de passerelle d'interfonctionnement défini dans un réseau d'un troisième opérateur de télécommunication et configuré pour traiter des messages envoyés depuis un système de passerelle d'interfonctionnement dans un réseau d'un premier opérateur de télécommunication lorsque le système de passerelle d'interfonctionnement fonctionne normalement, et le premier système de passerelle d'interfonctionnement défini dans le réseau du troisième opérateur de télécommunication établit une connexion avec le système de passerelle d'interfonctionnement dans le réseau du premier opérateur de télécommunication par l'intermédiaire du dispositif de réseau (303) ;
le second sous-système de traitement de service (302) est un second système de passerelle d'interfonctionnement défini dans le réseau du troisième opérateur de télécommunication et configuré pour traiter des messages envoyés depuis un système de passerelle d'interfonctionnement dans un réseau d'un deuxième opérateur de télécommunication lorsque le second système de passerelle d'interfonctionnement fonctionne normalement, et le second système de passerelle d'interfonctionnement défini dans le réseau du troisième opérateur de télécommunication établit une connexion avec le système de passerelle d'interfonctionnement dans le réseau du deuxième opérateur de télécommunication par l'intermédiaire du dispositif de réseau (303) ;
le dispositif de réseau (303) responsable du mappage d'adresse est adapté pour, après qu'un problème s'est produit dans un dispositif du premier sous-système de traitement de service (301), modifier une relation de mappage d'une première adresse de protocole Internet (IP) qui est mappée sur le premier sous-système de traitement de service (301) afin de mapper la première adresse IP qui est mappée sur le premier sous-système de traitement de service (301) sur une seconde adresse IP du second sous-système de traitement de service (302) ; et
le second sous-système de traitement de service (302) est adapté pour, après que le dispositif de réseau (303) a modifié la relation de mappage de la première adresse IP qui est mappée sur le premier sous-système de traitement de service (301), traiter les messages envoyés depuis le système de passerelle d'interfonctionnement dans le réseau du premier opérateur de télécommunication selon des données qui sont stockées à l'avance et nécessaires pour traiter les messages envoyés depuis le système de passerelle d'interfonctionnement dans le réseau du premier opérateur de télécommunication.

7. Système selon la revendication 6, **caractérisé en ce que** le second sous-système de traitement de service (302) est adapté pour, après que la relation de mappage de la première adresse IP qui est mappée sur le premier sous-système de traitement de service (301) a été modifiée par le dispositif de réseau (303), démarrer en utilisant un premier compte d'urgence qui est prédéfini pour être utilisé pour se connecter avec un objet de communication du premier sous-système de traitement de service (301) et établir une connexion avec l'objet de communication du premier sous-système de traitement de service (301) par l'intermédiaire du premier compte d'urgence.

8. Système selon la revendication 6, **caractérisé en ce que** le second sous-système de traitement de service (302) est adapté pour, après que la relation de mappage de la première adresse IP qui est mappée sur le premier sous-système de traitement de service (301) a été modifiée par le dispositif de réseau (303), démarrer en utilisant un second compte d'urgence qui est prédéfini pour être utilisé pour se connecter avec un dispositif périphérique du premier sous-système de traitement de service (301) et établir une connexion avec le dispositif périphérique du premier sous-système de traitement de service (301) par l'intermédiaire du second compte d'urgence.

9. Système selon la revendication 6, 7 ou 8, **caractérisé en ce que**
le dispositif de réseau (303) est en outre adapté pour, après qu'une défaillance du dispositif dans le premier sous-système de traitement de service (301) a été supprimée, restaurer la relation de mappage de la première adresse IP du premier sous-système de traitement de service (301) ;
le second sous-système de traitement de service (302) est en outre adapté pour, après que la défaillance du dispositif dans le premier sous-système de traitement de service (301) a été supprimée, déconnecter une connexion avec un objet de communication et un dispositif périphérique du premier sous-système de traitement de service (301) ; et
le premier sous-système de traitement de service (301) est adapté pour rétablir une connexion avec l'objet de communication et le dispositif périphérique après que la défaillance a été supprimée.

10. Système selon la revendication 9, **caractérisé en ce que** le second sous-système de traitement de service (302) est en outre adapté pour exécuter un script de dispositif de réseau prédéfini dans le second sous-système de traitement de service (302) pour commander le dispositif de réseau (303) responsable du mappage d'adresse pour modifier la relation de mappage de la première adresse IP qui est mappée sur le premier sous-système de traitement de service (301) ou restaurer la relation de mappage de la première adresse IP du premier système de traitement de service.
